# EUROPEAN PATENT APPLICATION

(11) **EP 4 850 801 A1**
(43) Date of publication of application: **09.12.2026**
(21) Application number: 25747760.4
(22) Date of filing: 23.01.2025
(51) Int. Cl.: B01F 31/24, B01F 35/42, G01N 1/38

(54) **SHAKING APPARATUS AND AUTOMATED SHAKING SYSTEM**

(30) Priority: 04.02.2024 CN 202420274770 U
(71) Applicant: Chemlex Technology Co., Ltd., Shanghai 200120 (CN)
(72) Inventor: XU, Haibin, Shanghai 200120 (CN); LU, Chao, Shanghai 200120 (CN)
(74) Representative: Range, Christopher William
(86) International application number: PCT/CN2025/074425
(87) International publication number: WO 2025/162192

(57) **Abstract**

The embodiment of the present invention provides a mixing device and an automated mixing system, relating to the field of sample reaction and processing equipment. According to the mixing device provided by the embodiments of the present invention, the sample container has an opening facing a first direction. Since the force applying mechanism drives the fixing mechanism to reciprocate along a second direction perpendicular to the first direction, the sample contained in the sample container is shaken in the second direction during the reciprocating movement of the fixing mechanism and thus is mixed. Therefore, during the shaking of the sample container, the sample does not directly impact the opening of the sample container facing the first direction during the shaking process, but impacts the inner wall of the sample container, simulating a manual shaking manner. Thereby, the risk of sample leakage from the sample container body due to the sample directly impacting the opening of the sample container is reduced. Since the sample directly impacts the inner wall of the sample container, the possibility of the sample adhering to the inner wall of the sample container is also reduced, and the residue of the sample at the opening can also be reduced.

## Description

### CROSS-REFERENCE TO THE RELATED APPLICATIONS

This application claims priority to Chinese Patent Application No. 202420274770.4, filed with the China National Intellectual Property Administration on February 04, 2024 and entitled "MIXING DEVICE AND AUTOMATED MIXING SYSTEM", the entire contents of which are incorporated herein by reference.

### TECHNICAL FIELD

The present invention relates to the field of sample reaction and processing equipment, and in particular, to a mixing device (or shaking device) and an automated mixing system.

### BACKGROUND

In biochemical experiments, different types of reagents, such as solids and liquids or liquids and solids, are usually placed in sample containers such as sample vials, and the sample containers are subjected to a mixing operation to enable the reagents to be rapidly and uniformly mixed together to facilitate reaction or subsequent operations.

However, during the shaking of sample containers by existing sample mixing equipment, there is a risk of liquid spilling from the bottle mouth, and for reactions involving small sample amounts or solid participation, wall adhesion and/or lid adhesion are prone to occur, resulting in reagent loss.

### SUMMARY

In view of the above, embodiments of the present invention provide a mixing device and an automated mixing system, which can solve the above technical problems to a certain extent.

In a first aspect, embodiments of the present invention provide a mixing device, comprising:
a fixing mechanism, wherein the fixing mechanism comprises at least one fixing assembly, the fixing assembly comprises a fixing portion configured to fix a sample container, and the sample container has an opening facing a first direction; and
a force applying mechanism, connected to the fixing mechanism, wherein the force applying mechanism applies force to the fixing mechanism such that the fixing mechanism reciprocates in a second direction perpendicular to the first direction.

Optionally, the fixing assembly comprises a first clamping portion and a second clamping portion arranged opposite to each other, the first clamping portion and the second clamping portion are configured to be capable of approaching each other to clamp the sample container and moving away from each other to release the sample container;
a portion of the first clamping portion configured to abut against the sample container has the same shape as an outer side portion of the sample container, and a portion of the second clamping portion configured to abut against the sample container has the same shape as the outer side portion of the sample container; and
the portion of the first clamping portion configured to abut against the sample container and the portion of the second clamping portion configured to abut against the sample container are both flexible portions.

Optionally, the fixing mechanism further comprises a mounting member, the at least one fixing assembly is disposed on the mounting member, and the force applying mechanism comprises:
a rotating member, wherein the rotating member rotates about an axis extending along a third direction, wherein the third direction is perpendicular to the first direction and the second direction; and
a connecting member, wherein the connecting member comprises opposite first and second ends, the first end is rotatably connected to the mounting member, and the second end is rotatably connected to the rotating member.

Optionally, the force applying mechanism further comprises:
a first guiding member and a second guiding member, wherein the first guiding member is connected to the mounting member, one of the first guiding member and the second guiding member extends along the second direction, and the first guiding member cooperates with the second guiding member such that the first guiding member moves along the second guiding member.

Optionally, the at least one fixing assembly comprises at least one group of three fixing assemblies sequentially arranged in the second direction, and at least a portion of the fixing assembly located in a middle of the three fixing assemblies is detachable from between the two fixing assemblies located on outer sides, such that the two fixing assemblies located on the outer sides of the three fixing assemblies can approach each other and move away from each other; and
the mixing device further comprises a weighing mechanism, the weighing mechanism comprises at least one receiving portion, the receiving portion is configured to receive the sample container, the weighing mechanism is configured to weigh the sample container received on each of the receiving portions, and the at least one receiving portion is located on a side of the fixing assembly in the first direction,
wherein the at least one receiving portion comprises first receiving portions corresponding one-to-one to the fixing portions comprised in the three fixing assemblies, and second receiving portions corresponding one-to-one to the fixing portions comprised in the two fixing assemblies located on the outer sides after approaching each other.

Optionally, the first receiving portions and the second receiving portions are alternately arranged in the second direction; and the first receiving portions and the second receiving portions are configured to have different shapes and/or sizes to be configured to receive different sample containers respectively.

Optionally, the fixing mechanism further comprises a mounting member, the at least one fixing assembly is disposed on the mounting member, and the mounting member has a groove extending along the second direction and corresponding to at least one of the two fixing assemblies located on the outer sides of the three fixing assemblies, such that the at least one fixing assembly moves along the groove.

Optionally, the fixing assembly comprises a clamping body, and a first clamping portion and a second clamping portion arranged opposite to each other, the first clamping portion and the second clamping portion are both detachably connected to the clamping body, and the clamping body drives the first clamping portion and the second clamping portion to approach each other to clamp the sample container and to move away from each other to release the sample container; and
the clamping body of the fixing assembly located in the middle of the three fixing assemblies is staggered from between the two fixing assemblies located on the outer sides, and the first clamping portion and the second clamping portion of the fixing assembly located in the middle are disposed between the two fixing assemblies located on the outer sides.

Optionally, the mixing device further comprises a weighing mechanism, the weighing mechanism comprises a plurality of receiving portions, and the receiving portions are configured to receive the sample container,
wherein the fixing mechanism further comprises a driving assembly, the driving assembly is connected to the at least one fixing assembly, and the driving assembly is capable of driving the at least one fixing assembly to move away from the plurality of receiving portions along the first direction, such that the sample container received in the receiving portions is detached from the receiving portions.

In a second aspect, embodiments of the present invention provide an automated mixing system, comprising the mixing device as described above, wherein the mixing device comprises a weighing mechanism, the weighing mechanism comprises at least one receiving portion, the receiving portion is configured to receive the sample container, the automated mixing system comprises a robotic arm, and the robotic arm is configured to grab the sample container such that the sample container is detached from the receiving portion; and
the sample container comprises a container body and a cover member, the container body has the opening, the cover member closes the opening, and the robotic arm is further configured to mount the cover member on the container body.

Compared with the existing technology, the embodiments of the present invention include, for example, the following beneficial effects.

According to the mixing device provided in the present invention, the sample container has an opening facing the first direction. Since the force applying mechanism drives the fixing mechanism to reciprocate along the second direction perpendicular to the first direction, the sample contained in the sample container is shaken in the second direction during the reciprocating movement of the fixing mechanism and thus is mixed. Therefore, during the shaking of the sample container, the sample does not directly impact the opening of the sample container facing the first direction during the shaking process, but impacts the inner wall of the sample container, simulating a manual shaking manner. Thereby, on one hand, the risk of sample leakage from the sample container due to the sample directly impacting the opening of the sample container is reduced; on the other hand, since the sample directly impacts the inner wall of the sample container, the likelihood of the sample adhering to the inner wall of the sample container is also reduced, and the residue of the sample at the opening can also be reduced.

In order to make the above purposes, features and advantages of the present invention more apparent, preferred embodiments are described in detail below with reference to the drawings.

### BRIEF DESCRIPTION OF THE DRAWINGS

In order to explain the technical solutions of the embodiments of the present invention more clearly, the drawings required in the embodiments will be briefly described below. It should be understood that the following drawings only show certain embodiments of the present invention and therefore should not be considered as limiting the scope. For those of ordinary skill in the art, other related drawings can also be obtained based on these drawings without creative efforts.
FIG. 1 is a schematic view of a three-dimensional drawing of a mixing device according to an embodiment of the present invention.
FIG. 2 is a schematic view of a three-dimensional drawing of the mixing device from another perspective according to an embodiment of the present invention.
FIG. 3 is a schematic view of a two-dimensional drawing of a partial structure of the mixing device according to an embodiment of the present invention.
FIG. 4 is a schematic enlarged view of portion A in FIG. 3.
FIG. 5 is a schematic view of a three-dimensional drawing of a partial structure of the mixing device according to an embodiment of the present invention.
FIG. 6 is a schematic enlarged view of portion B in FIG. 5.
FIG. 7 is a schematic view of a three-dimensional drawing of a partial structure of the mixing device according to an embodiment of the present invention.
FIG. 8 is a schematic view of a three-dimensional drawing of a partial structure of a weighing mechanism of the mixing device according to an embodiment of the present invention.
FIG. 9 is a schematic view of a two-dimensional drawing of a partial structure of a weighing mechanism of the mixing device according to an embodiment of the present invention.

### Reference numerals:

100-fixing mechanism; 110-fixing assembly; 111-fixing portion; 112-first clamping portion; 113-second clamping portion; 114-clamping body; 120-mounting member; 121-groove; 122-vertical plate structure; 123-horizontal plate structure; 124-extension plate structure;
200-force applying mechanism; 210-rotating member; 220-connecting member; 230-motor; 240-first guiding member; 250-second guiding member;
300-weighing mechanism; 310-first receiving portion; 320-second receiving portion;
400-sample container; 410-container body; 420-opening;
500-base; F1-first direction; F2-second direction; F3-third direction.

### DETAILED DESCRIPTION OF THE EMBODIMENTS

The technical solutions of the present invention will be described clearly and completely below with reference to the drawings. It is obvious that the described embodiments are a part of the embodiments of the present invention, rather than all of the embodiments. All other embodiments obtained by those of ordinary skill in the art based on the embodiments in the present invention without creative efforts shall fall within the protection scope of the present invention.

In the description of the present invention, it should be noted that the orientation or positional relationships indicated by the terms "center", "upper", "lower", "left", "right", "vertical", "horizontal", "inner", "outer", etc. are based on the orientation or positional relationships shown in the drawings, and are only for the convenience of describing the present invention and simplifying the description, rather than indicating or implying that the referred device or element must have a particular orientation or be constructed and operated in a particular orientation, and therefore should not be construed as limiting the present invention. In addition, the terms "first", "second", and "third" are used for descriptive purposes only and should not be construed as indicating or implying relative importance.

In the description of the present invention, it should be noted that, unless otherwise explicitly specified and limited, the terms "install", "connect", and "link" should be understood broadly. For example, they can be fixed connections, detachable connections, or integrated connections; they can be mechanical connections or electrical connections; they can be direct connections or indirect connections through an intermediate medium, and can be internal communication between two elements. For those of ordinary skill in the art, the specific meanings of the above terms in the present invention can be understood according to specific circumstances.

In addition, the technical solutions between various embodiments can be combined with each other, but must be based on what those of ordinary skill in the art can implement. When the combination of technical solutions is contradictory or unachievable, it should be considered that such combination of technical solutions does not exist and is not within the protection scope required by the present invention.

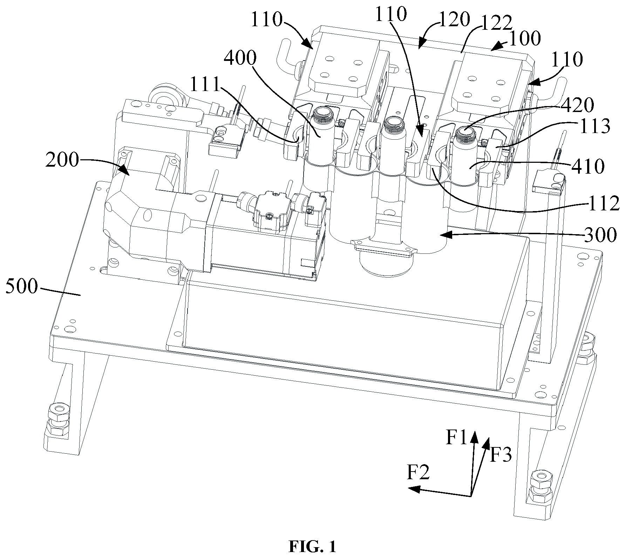

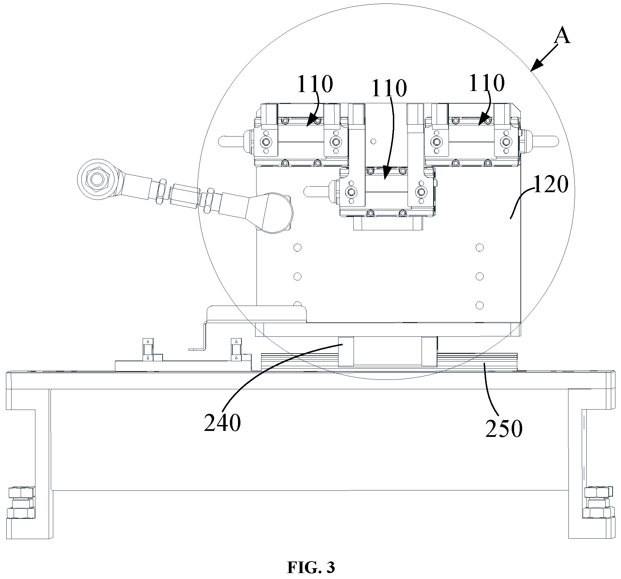

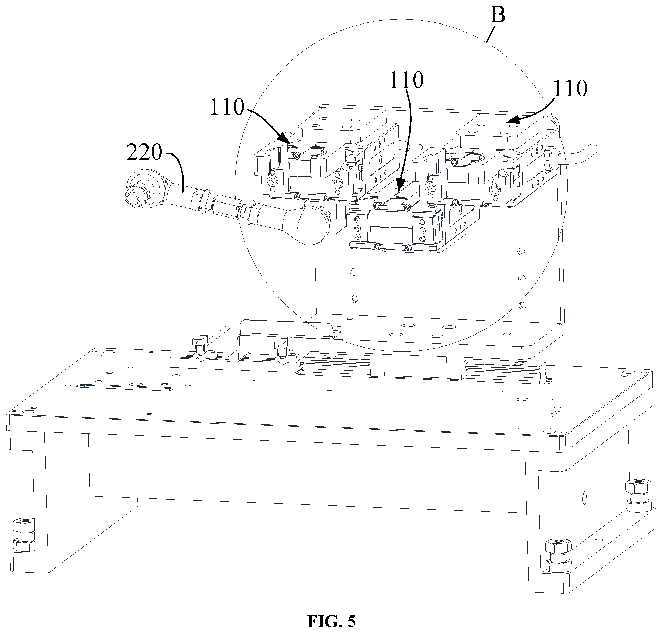

A mixing device is provided according to an embodiment of the present invention, and the structure and working principle of the mixing device will be specifically described below with reference to FIG. 1 to FIG. 9.

The mixing device provided according to the embodiment of the present invention comprises a fixing mechanism 100 and a force applying mechanism 200. The fixing mechanism 100 comprises at least one fixing assembly 110 (for example, one or more), the fixing assembly 110 comprises a fixing portion 111 configured to fix a sample container 400, and the sample container 400 has an opening 420 facing a first direction F1. Optionally, the force applying mechanism 200 is connected to the fixing mechanism 100, the force applying mechanism 200 applies force to the fixing mechanism 100 such that the fixing mechanism 100 reciprocates in a second direction F2, and the second direction F2 is perpendicular to the first direction F1.

In this way, according to the mixing device provided by the embodiment of the present invention, the sample container 400 has the opening 420 facing the first direction F1. Since the force applying mechanism 200 drives the fixing mechanism 100 to reciprocate along the second direction F2 perpendicular to the first direction F1, the sample contained in the sample container 400 is shaken in the second direction F2 during the reciprocating movement of the fixing mechanism 100 and thus is mixed. Therefore, during the shaking of the sample container 400, the sample does not directly impact the opening 420 of the sample container 400 facing the first direction F1 during the shaking process, but impacts the inner wall of the sample container 400, simulating a manual shaking manner. Thereby, on one hand, the risk of sample leakage from the sample container 400 due to the sample directly impacting the opening 420 of the sample container 400 is reduced; on the other hand, since the sample directly impacts the inner wall of the sample container 400, the possibility of the sample adhering to the inner wall of the sample container 400 is also reduced, and the residue of the sample at the opening 420 of the sample container 400 can also be reduced.

Optionally, the sample container 400 can comprise a container body 410, and the container body 410 can have the above opening 420. Optionally, the sample container 400 can be a coverless structure or a covered structure. In the example of the coverless structure (not shown in the drawings), the opening 420 of the container body 410 may not be closed by a cover member but is open to the outside. For example, the sample container 400 can be formed as a test tube. Optionally, in order to avoid the sample spilling from the sample container, the sample container as the coverless structure can be, for example, an elongated sample container having a certain length in the first direction, such as a long test tube.

Optionally, the sample container 400 can also be a covered structure, that is, the sample container 400 can further comprise a cover member (not shown in the drawings). The cover member can be disposed on the container body 410 such that the cover member closes the opening 420 of the container body 410. In the subsequent description, the sample container having the container body 410 and the cover member will be described as an example. Therefore, in this example, the mixing device provided according to the embodiment of the present invention in fact also reduces the residue of the sample at the cover member.

Optionally, as shown in FIG. 1, the sample container 400 can be, for example, a sample vial. The sample vial can have a cylindrical or approximately cylindrical container body 410, and the opening 420 is disposed at a bottom side of the container body 410 to place the sample into the container body 410 and take the sample out of the container body 410 via the opening 420. Optionally, an end of the container body 410 where the opening 420 is located can have a structure adapted to the cover member to connect the cover member to the container body 410. Here, the structure providing such adapted cooperation can be, for example, a thread. For example, the container body 410 is provided with an external thread, and the cover member has an internal thread, that is, the cover member can be rotatably mounted to the container body 410.

Optionally, the first direction F1 can be, for example, a vertical direction. In the example where the sample vial is cylindrical, the first direction F1 is substantially also the axial direction of the sample vial. Correspondingly, the second direction F2 can be, for example, a horizontal direction perpendicular to the first direction F1. Here, more specifically, the second direction F2 can be, for example, a first horizontal direction. A third direction F3 perpendicular to both the first direction F1 and the second direction F2 will also be mentioned subsequently, which will be described in the following description. In general, the sample container 400 can be arranged with the opening 420 facing upward and moved along the horizontal direction to mix the sample in the container.

Optionally, the fixing portion 111 can be, for example, a portion of a structure capable of defining a space configured to accommodate the sample container 400, such as a groove, a cavity, a blind hole, a through hole, or the like. Optionally, the fixing portion 111 can also be a structure that directly applies an adhesion force or a magnetic force to the sample container 400 such that the sample container 400 adheres to the outside of the fixing portion 111.

Optionally, the force applying mechanism 200 can substantially be a linear driving mechanism. Optionally, such a linear driving mechanism can utilize components having linear driving characteristics, such as an air cylinder, an electric cylinder, or a linear motor 230. Optionally, the linear driving mechanism can also utilize a combination of various components to achieve a linear driving effect, which will be specifically described in the following description.

Optionally, the fixing assembly 110 can comprise a first clamping portion 112 and a second clamping portion 113 arranged opposite to each other, and the first clamping portion 112 and the second clamping portion 113 can be configured to be capable of approaching each other to clamp the sample container 400 and moving away from each other to release the sample container 400.

Optionally, using the relative movement of the first clamping portion 112 and the second clamping portion 113 to clamp the sample container 400 to fix the sample container 400 is a relatively convenient, easily achievable and reliable fixing manner. Optionally, the first clamping portion 112 and the second clamping portion 113 can be driven by components connected thereto to approach and move away from each other. In addition, the above fixing portion 111 can comprise two portions of the first clamping portion 112 and the second clamping portion 113 respectively configured to clamp the sample container 400.

Optionally, the fixing assembly 110 can further comprise a clamping body 114, and both the first clamping portion 112 and the second clamping portion 113 can be connected to the clamping body 114 and driven by the clamping body 114. Optionally, the clamping body 114 can be, for example, a bidirectional cylinder, and the first clamping portion 112 and the second clamping portion 113 can be respectively connected to two output ends of the bidirectional cylinder. Optionally, the first clamping portion 112 and the second clamping portion 113 can be spaced apart in the second direction F2, that is, the first clamping portion 112 and the second clamping portion 113 respectively clamp two opposite sides of the corresponding sample container 400 in the second direction F2, so that interference of the first clamping portion 112 and the second clamping portion 113 with the opening 420 and the cover member of the sample container 400 is also advantageously avoided, to prevent affecting the sealing performance of the sample container 400.

Optionally, the portion of the first clamping portion 112 configured to abut against the sample container 400 can have the same shape as the outer side portion of the sample container 400, and the portion of the second clamping portion 113 configured to abut against the sample container 400 can have the same shape as the outer side portion of the sample container 400. Such shape adaptation is conducive to better fitting between the first clamping portion 112 and the second clamping portion 113 and the outer side of the corresponding sample container 400, thereby having a larger contact area, and in turn avoiding shaking or twisting of the sample container 400 relative to the first clamping portion 112 and the second clamping portion 113, ensuring that the sample container 400 is reliably fixed. It should be noted that the "same shape" mentioned here means that: the portion of the first clamping portion 112 configured to abut against the sample container 400 can have the same outer contour shape as the outer side portion of the sample container 400, and the portion of the second clamping portion 113 configured to abut against the sample container 400 can have the same outer contour shape as the outer side portion of the sample container 400, rather than being in the same size. The size relationship will be described in the following description.

Optionally, in the example where the sample container 400 has an outer cylindrical surface, the side of the first clamping portion 112 facing the sample container 400 (i.e., the inner side) can be, for example, a portion of an inner cylindrical surface, that is, an arc surface. Similarly, the second clamping portion 113 is also the same. In terms of size, in order to be able to accommodate more different types of sample containers 400, the inner diameter of the arc surfaces of both the first clamping portion 112 and the second clamping portion 113 can be larger than the outer diameter of the sample container 400.

Optionally, the portion of the first clamping portion 112 configured to abut against the sample container 400 and the portion of the second clamping portion 113 configured to abut against the sample container 400 can both be flexible portions. Thereby, the first clamping portion 112 and the second clamping portion 113 can form a flexible clamping on the sample container 400. On one hand, such clamping is less likely to cause damage to the sample container 400 due to the flexible characteristic; on the other hand, the preload provided by the flexible clamping can increase the friction force between the first clamping portion 112 and the second clamping portion 113 and the sample container 400, thereby avoiding slipping of the sample container 400 from the first clamping portion 112 and the second clamping portion 113. Optionally, the flexible portion can be formed of a flexible material, such as rubber or the like, and the flexible portion can be coated on the outside of the main body structures of both the first clamping portion 112 and the second clamping portion 113 respectively.

Optionally, the fixing mechanism 100 can further comprise a mounting member 120, and the at least one fixing assembly 110 can be disposed on the mounting member 120. Optionally, the mounting member 120 can comprise a vertical plate structure 122 serving as a main body (disposed along the vertical direction), and can further comprise a plurality of extension plate structures 124 (optionally, each extension plate structure 124 can be perpendicular to the vertical plate structure 122, that is, the extension plate structures 124 can be horizontally arranged) disposed on one side of the vertical plate structure 122 and corresponding one-to-one to the at least one fixing assembly 110 (for example, a plurality of fixing assemblies 110). Optionally, the clamping body 114 of the fixing assembly 110 mentioned in the above description can be connected to one side of the corresponding extension plate structure 124 and can also be connected to the vertical plate structure 122. Such connection can be detachable. For example, the clamping body 114 is mounted to the vertical plate structure 122 and the corresponding extension plate structure 124 by bolts.

Optionally, the force applying mechanism 200 can comprise a rotating member 210 and a connecting member 220. The rotating member 210 can rotate about an axis extending along the third direction F3. As described above, the third direction F3 is perpendicular to the first direction F1 and the second direction F2 (that is, the third direction F3 can be a second horizontal direction perpendicular to the second direction F2). Optionally, the connecting member 220 can comprise opposite first and second ends, the first end being rotatably connected to the mounting member 120, and the second end being rotatably connected to the rotating member 210.

Optionally, both the rotating member 210 and the connecting member 220 can be rod structures. The rotating member 210 can be a crank in substance, and the connecting member 220 can be a connecting rod structure respectively hinged to the mounting member 120 and the crank. Optionally, the fixing mechanism 100 can comprise a seat disposed on the vertical plate structure 122 of the mounting member 120, and a bearing for pivotally connecting the connecting rod to the seat can be disposed in the seat. Optionally, the pivotal connection of the connecting rod to the seat and the crank can both be implemented using short shafts and bearings. Optionally, the rotating member 210 can also be a disc-shaped structure or other structural forms capable of driving the connecting member 220 to rotate, and is not limited thereto.

Optionally, the force applying mechanism 200 can further comprise a first guiding member 240 and a second guiding member 250. The first guiding member 240 can be connected to the mounting member 120, one of the first guiding member 240 and the second guiding member 250 can extend along the second direction F2, and the first guiding member 240 cooperates with the second guiding member 250 such that the first guiding member 240 moves along the second guiding member 250.

In this way, cooperating with the above crank-link structure formed by the rotating member 210 and the connecting member 220, the first guiding member 240 can move along the second guiding member 250, so that the fixing mechanism 100 can move along the second guiding member 250. Since one of the first guiding member 240 and the second guiding member 250 extends along the second direction F2, the fixing mechanism 100 can also be effectively guided along the second direction F2.

Optionally, the first guiding member 240 can be, for example, a slider, and the second guiding member 250 can be, for example, a guide rail extending along the second direction F2. Of course, the two can also be other mutually cooperating movement connection manners. For example, the first guiding member 240 can be, for example, a guide rail extending along the second direction F2, and the second guiding member 250 can be, for example, a slider or the like. Optionally, the mounting member 120 can further comprise a horizontal plate structure 123 connected to a lower side of the vertical plate structure 122. The horizontal plate structure 123 can also be arranged along the horizontal direction, and the first guiding member 240 can be connected to a lower side of the horizontal plate structure 123 of the mounting member 120 by a connecting member such as a screw.

In addition, optionally, the mixing device can further comprise a base 500, and the base 500 has a mounting surface. The above guide rail can be disposed on the mounting surface. Optionally, the force applying mechanism 200 can also be disposed on the mounting surface. Optionally, the force applying mechanism 200 can comprise, for example, a motor 230 (for example, a reduction motor), and one end of the crank can be connected to an output end of the motor 230. The motor 230 can be disposed on the mounting surface.

Optionally, the plurality of fixing assemblies 110 comprise at least one group of three fixing assemblies 110 sequentially arranged in the second direction F2, and at least a portion of the fixing assembly 110 located in a middle of the three fixing assemblies 110 is detachable from between the two fixing assemblies 110 located on outer sides, such that the two fixing assemblies 110 located on the outer sides of the three fixing assemblies 110 can approach each other and move away from each other. Of course, the number of the fixing assemblies 110 can also be two, four, five, or the like. The plurality of fixing assemblies 110 are sequentially arranged in the second direction F2, and the number of the fixing assemblies 110 is not limited.

Optionally, the mixing device can further comprise a weighing mechanism 300. The weighing mechanism 300 can comprise a plurality of receiving portions, the receiving portions are configured to receive the sample container 400, the weighing mechanism 300 is configured to weigh the sample container 400 received on each of the receiving portions, and the plurality of receiving portions are located on a side of the fixing assembly 110 in the first direction F1. Optionally, the plurality of receiving portions comprise first receiving portions 310 corresponding one-to-one to the fixing portions 111 comprised in the three fixing assemblies 110, and second receiving portions 320 corresponding one-to-one to the fixing portions 111 comprised in the two fixing assemblies 110 located on the outer sides after approaching each other. The number of the first receiving portions 310 and the second receiving portions 320 is determined according to the number of the fixing assemblies 110, and is not limited thereto.

In this way, according to the mixing device provided by the embodiment of the present invention, the three fixing assemblies 110 belonging to the same group can respectively clamp the sample containers 400 located in the three first receiving portions 310 when at least a portion of the fixing assembly 110 in the middle has not been detached, and can allow the two fixing assemblies 110 on the outer sides to approach each other to clamp the sample containers 400 in the two second receiving portions 320 corresponding to these two fixing assemblies 110 when at least a portion of the fixing assembly 110 in the middle has been detached. Thereby, different sample containers 400 can be selectively placed in the first receiving portions 310 and the second receiving portions 320, and the arrangement of the three fixing assemblies 110 belonging to the same group can be switched between the above two manners to distinguish different mixing operations for different samples.

Optionally, at least a portion of the fixing assembly 110 in the middle is at least a portion of the structure that does not affect the two fixing assemblies 110 on the outer sides approaching each other to respectively correspond to the two second receiving portions 320, and can be the overall structure of the fixing assembly 110 in the middle or a portion of the structure of the fixing assembly 110 in the middle, which will be specifically described in the following description. In addition, optionally, the number of the fixing assemblies 110 can be three. However, it is not limited thereto. The number of the fixing assemblies 110 can be more. For example, the same fixing assembly 110 can belong to different two groups of the above group structures each comprising three fixing assemblies 110.

Optionally, the first receiving portions 310 and the second receiving portions 320 can be distributed in different manners as required. For example, the first receiving portions 310 and the second receiving portions 320 can be alternately arranged in the second direction F2; and the shapes and/or sizes of the first receiving portions 310 and the second receiving portions 320 can be selected to be the same and/or different shapes and/or sizes as required. For example, the first receiving portions 310 and the second receiving portions 320 can be configured to have different shapes and/or sizes to be configured to receive different sample containers 400 respectively. Thereby, based on the above description, the first receiving portions 310 and the second receiving portions 320 can be directly arranged to be capable of accommodating different sample containers 400.

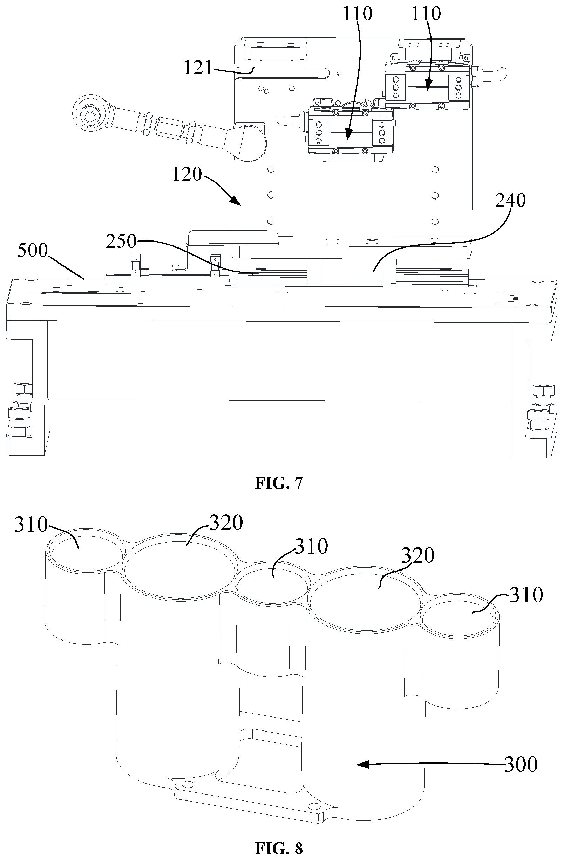

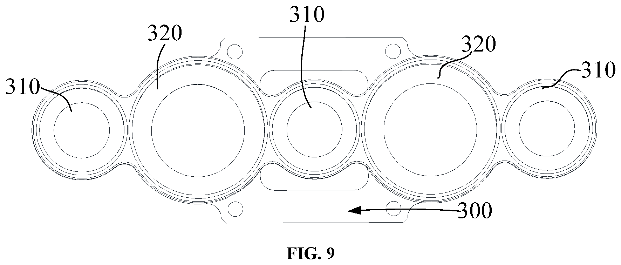

As shown in FIG. 8 and FIG. 9, optionally, both the first receiving portions 310 and the second receiving portions 320 can be cylindrical in shape, and both can be sequentially arranged along the second direction F2. For example, adjacent first receiving portion 310 and second receiving portion 320 can be connected by welding. The shapes of the first receiving portions 310 and the second receiving portions 320 can also be cuboid or other shapes, and are not limited thereto. The first receiving portions 310 and the second receiving portions 320 can also be connected by other manners such as insertion, snap connection, and adhesion, and are not limited thereto.

Optionally, the first receiving portions 310 can have a smaller depth and a smaller inner diameter to accommodate sample containers 400 having a lower height and a smaller outer diameter. In contrast, the second receiving portions 320 can have a larger depth and a larger inner diameter to accommodate sample containers 400 having a higher height and a larger outer diameter. In addition, optionally, the heights of the upper holes of the first receiving portions 310 and the second receiving portions 320 can be the same, and lower ends of adjacent second receiving portions 320 can be connected together by connecting strips, and the connecting strips can be welded to the adjacent second receiving portions 320.

Optionally, the weighing mechanism 300 can further comprise a weighing sensor assembly, and the sensor assembly can be disposed below the first receiving portions 310 and the second receiving portions 320, for example, connected to the second receiving portions 320, such that the sample container 400 placed on the first receiving portions 310 and the second receiving portions 320 can apply pressure to the sensor assembly, and the weight of the sample container 400 can be obtained by means of the pressure. Optionally, the sensor assembly can comprise a pressure sensor.

Optionally, the mounting member 120 has a groove 121 extending along the second direction F2 and corresponding to at least one of the two fixing assemblies 110 located on the outer sides of the three fixing assemblies 110, such that the at least one fixing assembly moves along the groove 121. In this way, guidance for the movement of the fixing assembly 110 can be provided, and the difficulty of position adjustment of the fixing assembly 110 is reduced.

Optionally, as shown in FIG. 7, the groove 121 can be disposed on the vertical plate structure 122 of the mounting member 120, and the groove 121 can have a notch portion. The notch portion can be open at an edge of the vertical plate structure 122, thereby allowing the corresponding fixing assembly 110 to be mounted into the groove 121 from the notch portion. Correspondingly, the corresponding fixing assembly 110 can be provided with a protruding strip structure adapted to the groove 121 on a side of the clamping body 114 facing the vertical plate structure 122 of the mounting member 120, thereby allowing the protruding strip structure to slide in the groove 121. After the fixing assembly 110 slides into position, the fixing assembly 110 is further connected to the vertical plate structure 122 by bolts.

In addition, optionally, the groove 121 can also not be configured to guide the fixing assembly 110, but can be configured as a wiring channel, that is, wires are disposed in the groove 121 to save space and avoid exposed wires.

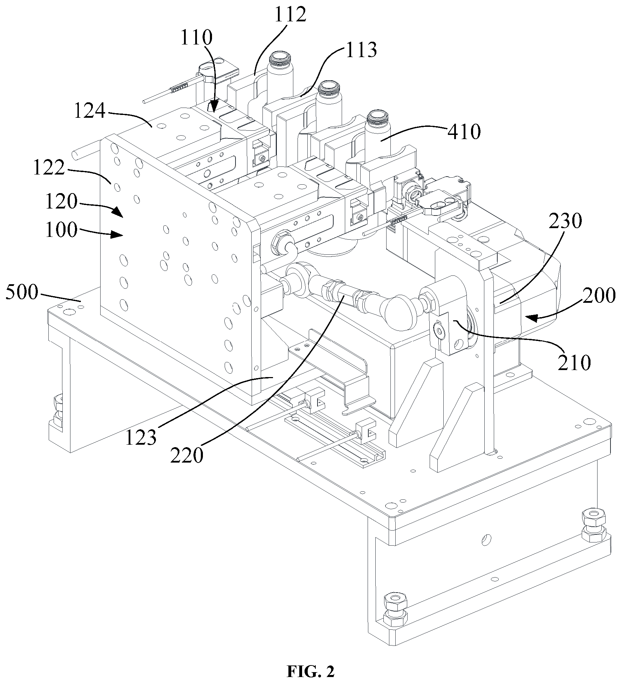

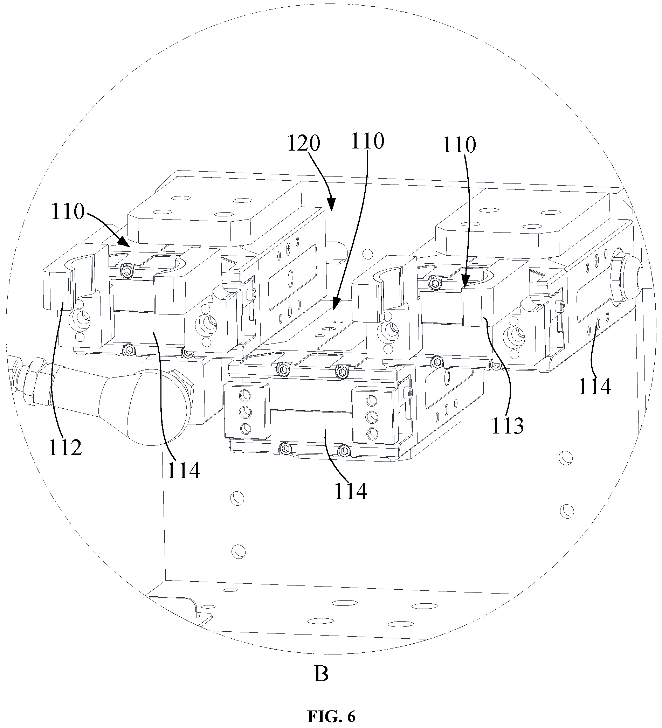

Optionally, in the example shown in FIG. 2 to FIG. 5, the detached portion can be a portion of the fixing assembly 110 in the middle, for example, the first clamping portion 112 and the second clamping portion 113 of the fixing assembly 110 in the middle. Optionally, the clamping body 114 of the fixing assembly 110 located in the middle of the three fixing assemblies 110 is staggered from between the two fixing assemblies 110 located on the outer sides (see FIG. 6, for example, staggered along the first direction F1, that is, staggered downward), and the first clamping portion 112 and the second clamping portion 113 of the fixing assembly 110 located in the middle are disposed between the two fixing assemblies 110 located on the outer sides.

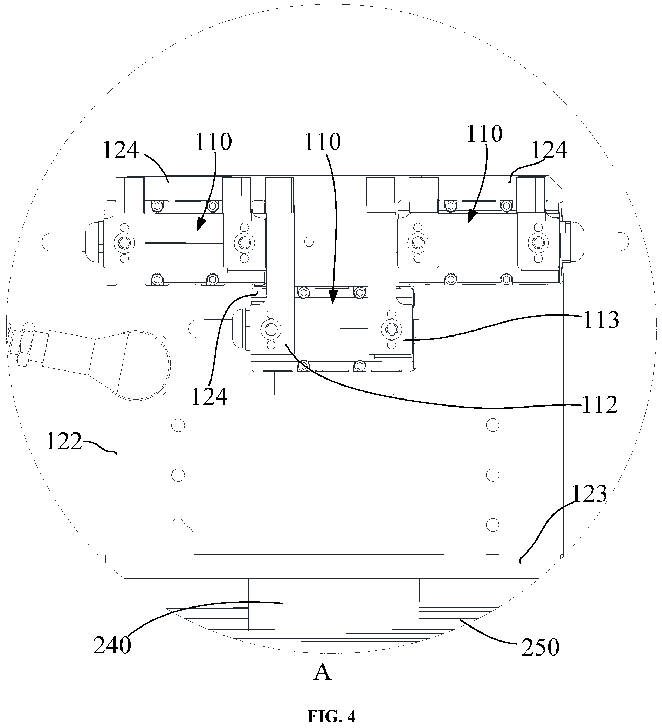

As shown in FIG. 4, optionally, the first clamping portion 112 and the second clamping portion 113 of the fixing assembly 110 located in the middle can have a larger size in the first direction F1, that is, be longer. Thus, even when the clamping body 114 is staggered from the two fixing assemblies 110 on the outer sides, the first clamping portion 112 and the second clamping portion 113 can extend between the two fixing assemblies 110 and be flush with the clamping portions of the two fixing assemblies 110 on the outer sides. In this way, only the first clamping portion 112 and the second clamping portion 113 of the fixing assembly 110 in the middle need to be detached from the clamping body 114 of the fixing assembly 110 to release the space between the two fixing assemblies 110, allowing the two fixing assemblies 110 to move toward the middle. Therefore, the workload of detachment and subsequent installation is effectively saved.

In addition, optionally, the relative positional relationship between the three fixing assemblies 110 can also not be adjusted, but the force applying mechanism 200 can be utilized to drive the fixing mechanism 100 to move along the second direction F2, moving two of the three fixing assemblies 110 (i.e., the leftmost fixing assembly 110 and the fixing assembly 110 in the middle) above the two second receiving portions 320, and using these two fixing assemblies to clamp the sample containers 400 in the two second receiving portions 320.

Optionally, the fixing mechanism 100 can further comprise a driving assembly (not shown in the drawings), the driving assembly is connected to the at least one fixing assembly 110, and the driving assembly is capable of driving the at least one fixing assembly 110 to move away from the plurality of receiving portions along the first direction F1, such that the sample container 400 received in the receiving portion is detached from the receiving portion. In this way, after the sample container 400 received in the receiving portion is detached from the receiving portion, the corresponding fixing assembly 110 can be utilized to fix the sample container 400, and then a mixing operation is performed, thereby avoiding interference between the sample container 400 and the receiving portion.

Optionally, the driving assembly can comprise driving modules connected one-to-one to the at least one fixing assembly 110, and the driving modules can be connected to the clamping body 114 of the corresponding fixing assembly 110. For example, the driving modules can comprise components such as an air cylinder, an electric cylinder, and a linear motor 230. In addition, optionally, for the movable fixing assembly 110 on the outer side, the groove 121 structure as described above may not be provided, and the driving module can be a two-axis module (for example, a module formed by combining two linear motors 230) to directly drive the clamping body 114 to move upward away from the corresponding receiving portion and move laterally along the second direction F2.

An automated mixing system is provided according to a second aspect of the embodiment of the present invention. The automated mixing system comprises the mixing device as described above and a robotic arm (not shown in the drawings). The sample container 400 is grabbed by the robotic arm such that the sample container 400 is detached from the receiving portion, and then the corresponding fixing assembly 110 is used to fix the sample container 400. In addition, the robotic arm is further configured to mount the cover member on the container body 410, for example, by screwing the cover member onto the container body 410.

According to the mixing device provided by the embodiment of the present invention, the robotic arm can achieve automatic opening and closing of the cover, and can also automatically weigh and mix samples, forming an integrated device for automatic cover opening/closing, automatic weighing, and automatic mixing, thereby achieving multi-function integration. Optionally, the robotic arm can be part of an automatic robot. The automatic robot transfers, for example, three sample containers 400 (for example, sample vials) already loaded with solids to the weighing mechanism 300 for a first weighing to perform taring.

On this basis, a feeding head starts to feed each sample container 400. After each sample vial is fed, weighing is performed. The above sensor assembly can be communicatively connected to a control mechanism (for example, a control mechanism having a single-chip microcomputer), and data is uploaded by the control mechanism. After sequentially completing the feeding of the three sample vials, comparison data is output, and operation continues without alarm.

The corresponding fixing assembly 110 clamps the sample vial, and then the robotic arm performs a cover closing operation, sequentially tightening the cover (i.e., the cover member). Then the fixing assembly 110 sequentially releases the sample vial, and the robotic arm sequentially clamps and lifts the sample vial. Then the corresponding fixing assembly 110 clamps the sample vial such that the sample vial is detached from the receiving portion to avoid interference with the receiving portion during the subsequent mixing process. The force applying mechanism 200 adjusts the operating speed of the motor 230 according to the required mixing intensity to achieve evenly mixing. After evenly mixing, the force applying mechanism 200 is stopped. After the robotic arm clamps the sample vial, the clamping of the corresponding fixing assembly 110 is released. Then the robotic arm places the sample vial on the corresponding receiving portion. Then the fixing assembly 110 clamps the sample vial, the robotic arm performs an automatic cover opening operation, and after the cover is placed in position, the fixing assembly 110 releases the sample vial. The robotic arm grabs the sample vial and sends it to the next operation step. The automated mixing system has the characteristics of a high degree of automation, high production efficiency, and strong integration.

According to the automated mixing system provided by the embodiment of the present invention, automatic cover opening/closing, automatic weighing, and automatic mixing can be satisfied, and three functions are integrated, resulting in a high functional realization rate per unit area. In addition, the control mechanism can also be configured with functions of taring, weighing and recording single feeding amount, and uploading data to a database, and can be configured to automatically compare with the feeding data of the feeding head. For deviation data exceeding a threshold, automatic alarm is triggered. Through verification and feedback, the accuracy of weighing is ensured. Such complete data recording is conducive to experimental result analysis. In addition, the lateral mixing operation simulates a manual shaking manner, reducing the risk of sample spillage and loss.

The above are only optional embodiments of the present invention and are not intended to limit the protection scope of the present invention. Any equivalent structural transformations made based on the inventive concept of the present invention using the contents of the description and the drawings of the present invention, or direct/indirect application in other related technical fields, are included within the protection scope of the present invention.

### INDUSTRIAL APPLICABILITY

The embodiment of the present invention provides a mixing device and an automated mixing system, which can reduce the risk of sample leakage from the sample container due to the sample directly impacting the opening of the sample container. The mixing device can also reduce the possibility of the sample adhering to the inner wall of the sample container, thereby reducing the residue of the sample at the opening.

## Claims

1. A mixing device, **characterized in that** the mixing device comprises:
a fixing mechanism, wherein the fixing mechanism comprises at least one fixing assembly, the fixing assembly comprises a fixing portion configured to fix a sample container, and the sample container has an opening facing a first direction; and
a force applying mechanism, wherein the force applying mechanism is connected to the fixing mechanism, and the force applying mechanism applies force to the fixing mechanism such that the fixing mechanism reciprocates in a second direction, wherein the second direction is perpendicular to the first direction.

2. The mixing device according to claim 1, wherein
the fixing assembly comprises a first clamping portion and a second clamping portion arranged opposite to each other, and the first clamping portion and the second clamping portion are configured to be capable of approaching each other to clamp the sample container, and moving away from each other to release the sample container.

3. The mixing device according to claim 2, wherein a portion of the first clamping portion configured to abut against the sample container has the same shape as an outer side portion of the sample container, and a portion of the second clamping portion configured to abut against the sample container has the same shape as the outer side portion of the sample container.

4. The mixing device according to claim 2 or 3, wherein a portion of the first clamping portion configured to abut against the sample container is a flexible portion; and/or a portion of the second clamping portion configured to abut against the sample container is a flexible portion.

5. The mixing device according to any one of claims 1-4, wherein the fixing mechanism further comprises a mounting member, and the at least one fixing assembly is disposed on the mounting member.

6. The mixing device according to claim 5, wherein the mounting member comprises a vertical plate structure and at least one extension plate structure, the extension plate structure is connected to the vertical plate structure, and the fixing assembly is disposed on the extension plate structure.

7. The mixing device according to claim 6, wherein the extension plate structure is detachably connected to the vertical plate structure.

8. The mixing device according to any one of claims 5-7, wherein the force applying mechanism comprises:
a rotating member, wherein the rotating member rotates about an axis extending along a third direction, and the third direction is perpendicular to the first direction and the second direction; and
a connecting member, wherein the connecting member comprises opposite first and second ends, the first end being rotatably connected to the mounting member, and the second end being rotatably connected to the rotating member.

9. The mixing device according to claim 8, wherein the force applying mechanism further comprises:
a first guiding member and a second guiding member, wherein the first guiding member is connected to the mounting member, one of the first guiding member and the second guiding member extends along the second direction, and the first guiding member cooperates with the second guiding member such that the first guiding member moves along the second guiding member.

10. The mixing device according to any one of claims 1-9, wherein
the at least one fixing assembly comprises at least one group of three fixing assemblies sequentially arranged in a second direction, and at least a portion of the fixing assembly located in a middle of the three fixing assemblies is detachable from between the two fixing assemblies located on outer sides, such that the two fixing assemblies located on the outer sides of the three fixing assemblies can approach each other and move away from each other.

11. The mixing device according to claim 10, wherein the mixing device further comprises a weighing mechanism, the weighing mechanism comprises at least one receiving portion, the receiving portion is configured to receive the sample container, the weighing mechanism is configured to weigh the sample container received on each receiving portion, and the at least one receiving portion is located on a side of the fixing assembly in the first direction.

12. The mixing device according to claim 11, wherein the at least one receiving portion comprises first receiving portions corresponding one-to-one to the fixing portions comprised in the three fixing assemblies, and second receiving portions corresponding one-to-one to the fixing portions comprised in the two fixing assemblies located on the outer sides after approaching each other.

13. The mixing device according to claim 12, wherein
the first receiving portions and the second receiving portions are alternately arranged in a second direction; and the first receiving portions and the second receiving portions are configured to have different shapes and/or sizes to be configured to receive different sample containers respectively.

14. The mixing device according to any one of claims 10-13, wherein the fixing mechanism further comprises a mounting member, the at least one fixing assembly is disposed on the mounting member, and the mounting member has a groove extending along the second direction and corresponding to at least one of the two fixing assemblies located on the outer sides of the three fixing assemblies, such that the at least one fixing assembly moves along the groove.

15. The mixing device according to any one of claims 10-14, wherein
the fixing assembly comprises a clamping body, and a first clamping portion and a second clamping portion arranged opposite to each other, the first clamping portion and the second clamping portion are both detachably connected to the clamping body, and the clamping body drives the first clamping portion and the second clamping portion to approach each other to clamp the sample container, and to move away from each other to release the sample container; and
the clamping body of the fixing assembly located in the middle of the three fixing assemblies is staggered from between the two fixing assemblies located on the outer sides, and the first clamping portion and the second clamping portion of the fixing assembly located in the middle are disposed between the two fixing assemblies located on the outer sides.

16. The mixing device according to any one of claims 1-15, wherein the mixing device further comprises a weighing mechanism, the weighing mechanism comprises a plurality of receiving portions, and the receiving portions are configured to receive the sample containers; and
the fixing mechanism further comprises a driving assembly, the driving assembly is connected to the at least one fixing assembly, and the driving assembly is capable of driving the at least one fixing assembly to move away from the plurality of receiving portions along the first direction, such that the sample container received in the receiving portion is detached from the receiving portion.

17. An automated mixing system, **characterized in that** the automated mixing system comprises a robotic arm and the mixing device according to any one of claims 1-16, the mixing device comprises a weighing mechanism, the weighing mechanism comprises at least one receiving portion, and the receiving portion is configured to receive the sample container; and the robotic arm is configured to grab the sample container such that the sample container is detached from the receiving portion.

18. The automated mixing system according to claim 17, wherein the sample container comprises a container body and a cover member, the container body has the opening, the cover member closes the opening, and the robotic arm is further configured to mount the cover member on the container body.
